# EUROPÄISCHE PATENTANMELDUNG

(11) **EP 4 418 437 A1**
(43) Veröffentlichungstag der Anmeldung: **21.08.2024**
(21) Anmeldenummer: 23157030.0
(22) Anmeldetag: 16.02.2023
(51) Int. Cl.: H01M 50/503, H01M 50/517, H01R 35/00

(54) **MODULVERBINDER**

(71) Anmelder: Intercable Automotive Solutions GmbH, 39031 Bruneck (IT)
(72) Erfinder: BAUMGARTNER, Christoph, 39031 Bruneck (IT)
(74) Vertreter: Hernandez, Yorck

(57) **Zusammenfassung**

Ein Modulverbinder (100) zum elektrischen und mechanischen Verbinden von Batteriemodulen, aufweisend: ein Verbindungselement (110); eine erste Verbindungsvorrichtung (120); und eine zweite Verbindungsvorrichtung (130). Das Verbindungselement (110) weist eine erste Schnittstelle (111) und eine zweite Schnittstelle (112) auf, wobei die erste Schnittstelle (111) mittels der ersten Verbindungsvorrichtung (120) mit einem ersten Batteriemodul mechanisch und elektrisch verbindbar ist und wobei die zweite Schnittstelle (112) mittels der zweiten Verbindungsvorrichtung (130) mit einem zweiten Batteriemodul mechanisch und elektrisch verbindbar ist. Zumindest eine von der ersten Verbindungsvorrichtung (120) und der zweiten Verbindungsvorrichtung (130) bildet mit dem Verbindungselement (110) ein Gelenk aus zum Bereitstellen eines geometrischen Toleranzausgleichs bei der Montage.

## Beschreibung

### Gebiet der Erfindung

Die vorliegende Erfindung betrifft einen Modulverbinder, eine Batterie, ein Fahrzeug sowie die Verwendung eines Modulverbindendes mit einem Gelenk.

### Hintergrund

Modulverbinder sind aus dem Stand der Technik grundsätzlich bekannt. Modulverbinder werden beispielsweise eingesetzt, um Batteriemodule miteinander zu verbinden. Die miteinander verbundenen Batteriemodule bilden eine Batterie bzw. Akkumulator oder einen Energiespeicher. Die Batteriemodule, auch Zellmodule genannt, umfassen dabei beispielsweise je zwölf 60 Ah Zellen. Die Batteriemodule werden beispielsweise in einer Gehäusewanne eines Elektrofahrzeugs angeordnet. Die Batteriemodule dienen als Energiespeicher des Elektrofahrzeugs. Die Funktionsfähigkeit und Lebensdauer eines Antriebstrangs des Elektrofahrzeugs hängt wesentlich von dem Energiespeicher ab und im besonderen Maße von der Anordnung und Verbindung der einzelnen Batteriemodule.

Konventionelle Modulverbinder sind als Flexverbinder bzw. flexible Verbinder ausgebildet, damit diese einen Toleranzausgleich in x, y und z Richtung bei der Montage der Modulverbinder an die Batteriemodule bereitstellen können. Die Flexibilität diese Modulverbinder wird üblicherweise durch die Verwendung von elektrisch leitfähigen Kabeln, Zopfflechten, Vierkantlitzen, Rechtecklitzen, profilierte Flachlitzen, profilierte Gewebewände, flexible Flachlitzen, flexible Gewebewände und oder gewebte Flachseile bereitgestellt. Jedoch haben konventionelle Modulverbinder den Nachteil, dass diese mit abnehmender Länge, zum Beispiel wenn Batteriemodule nicht weit entfernt voneinander angeordnet sind, zunehmend unflexibel und hart werden, sodass ein Toleranzausgleich in x, y, und z Richtung bei kleinen Längen der konventionellen Modulverbinder nur noch stark eingeschränkt möglich ist.

In diesem Zusammenhang hat sich nun herausgestellt, dass ein Bedarf besteht, einen Modulverbinder bereitzustellen und derart zu verbessern, dass diese Modulverbinder ebenfalls mit abnehmender Länge flexibel bleiben. Es ist daher eine Aufgabe der vorliegenden Erfindung einen verbesserten flexiblen Modulverbinder bereitzustellen, welcher auch bei kleinen bzw. geringen Längen weiterhin flexibel bleibt und ist und ohne Kraftaufwand ein großer Toleranzausgleich der Anschlussstellten zueinander kompensiert werden kann.

Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafter Weise weiter.

### Zusammenfassung der Erfindung

Ein erfindungsgemäßer Modulverbinder zum elektrischen und mechanischen Verbinden von Batteriemodulen ist präsentiert. Der Modulverbinder weist ein Verbindungselement, eine erste Verbindungsvorrichtung, und eine zweite Verbindungsvorrichtung auf. Das Verbindungselement weist eine erste Schnittstelle und eine zweite Schnittstelle auf. Die erste Schnittstelle ist mittels der ersten Verbindungsvorrichtung mit einem ersten Batteriemodul mechanisch und elektrisch verbindbar. Die zweite Schnittstelle ist mittels der zweiten Verbindungsvorrichtung mit einem zweiten Batteriemodul mechanisch und elektrisch verbindbar. Zumindest eine von der ersten Verbindungsvorrichtung und der zweiten Verbindungsvorrichtung mit dem Verbindungselement bildet ein Gelenk aus zum Bereitstellen eines geometrischen Toleranzausgleichs bei der Montage.

Der Begriff "Verbindungselement" ist vorliegend breit zu verstehen und umfasst alle Elemente, welche zur mechanischen und elektrischen Verbindung von zumindest zwei Batteriemodulen und/oder Batterien geeignet sind. Alternativ oder hinzukommend kann das Verbindungselement auch dazu geeignet sein zumindest zwei Stromschienen miteinander zu verbinden. Das Verbindungselement kann zumindest einen Mittelbereich, zumindest einen ersten Schnittstellenbereich und zumindest einen zweiten Schnittstellenbereich aufweisen, wobei der zumindest einen Mittelbereich zwischen den zumindest zwei Schnittstellenbereichen angeordnet bzw. bereitgestellt ist. Mit anderen Worten beabstandet der Mittelbereich die zumindest zwei Schnittstellenbereiche. In dem ersten Schnittstellenbereich ist eine erste Schnittstelle angeordnet bzw. bereitgestellt. In dem zweiten Schnittstellenberiech ist eine zweite Schnittstelle angeordnet bzw. bereitgestellt. Das Verbindungselement kann ein starres, massives, einteiliges, mehrteiliges, unflexibles und/oder leicht flexibles Element sein, ist darauf aber nicht beschränkt. Beispielsweise, insbesondere gemäß einer bevorzugten Ausführungsform, ist das Verbindungselement ein starres, massives, unflexibles und/oder einteiliges Element. Das Verbindungselement kann aus Aluminium oder Kupfer bereitgestellt sein, ist darauf aber nicht beschränkt. Alternativ oder hinzukommend kann das Verbindungselement aus einem Material mit einer elektrischen Leitfähigkeit von mehr als 30 MS/m, bevorzugt mehr als 58 MS/m, bereitgestellt bzw. hergestellt sein. Das Verbindungselement kann aus einem einzigem Material oder einer Mischung von zumindest zwei Materialien bereitgestellt sein. Das Material kann hierbei ein Metall sein, ist darauf aber nicht beschränkt. Das Verbindungselement weist eine Quaderform auf, wobei die Quaderform zwei Kopfseiten und vier Außenseiten umfasst. Die Außenseiten der Quaderform sind dadurch gekennzeichnet, dass diese eine größere Länge und eine größere Fläche als die Kopfseiten der Quaderform aufweisen.

Der Begriff "Schnittstelle" ist vorliegend breit zu verstehen und umfasst zumindest zwei Stellen bzw. Bereiche des Verbindungselements, an welchen das Verbindungselement zu den Batteriemodulen elektrisch und mechanisch gekoppelt ist bzw. an den Batteriemodulen befestigt ist. Die Schnittstelle kann an oder in dem Verbindungselement ausgebildet sein. Beispielsweise kann eine Schnittstelle in dem Verbindungselement als ein Durchgangsloch bzw. Durchgangsbohrung ausgebildet sein. Das Durchgangsloch bzw. die Durchgangsbohrung erstreckt sich von einer ersten Außenseite des Verbindungselements zu einer gegenüberliegenden zweiten Außenseite des Verbindungselements. Beispielsweise kann eine Schnittstelle an dem Verbindungselement als eine Befestigungslasche an dem Verbindungselement bereitgestellt sein. Demzufolge ist die Schnittstelle entweder ein Teil des Verbindungselements oder ein separates Element, welches an dem Verbindungselement befestigt ist.

Der Begriff "Gelenk" ist vorliegend breit zu verstehen und umfasst jede Anordnung bzw. jedes System, welches eine in vorgegebener Art und Weise bewegliche Verbindung zwischen zwei starren Körpern bereitstellt. Mit anderen Worten ausgedrückt ist ein Gelenk ein technisches Gelenk. In einem technischen Gelenk stehen die zu verbindenden Körper bzw. Elemente in dauernder Berührung. Die in besonderer Weise geometrisch gestalteten beiden Berührungsstellen (z.B. Gelenkpfanne und Gelenkkopf) werden als Berührungs- oder Gelenkelemente bezeichnet. Diese bilden einen Formschluss aus. Das Gelenk kann hierbei ein Kugelgelenk, d.h. ein Gelenk mit drei Freiheitsgraden (x, y, z Richtung) sein, ist darauf aber nicht beschränkt. Ein Kugelgelenk ist hierbei dadurch ausgezeichnet, dass der Gelenkkopf eine kugelähnliche Form besitzt. Das Gegenstück, das den Kopf des Gelenks vollständig oder zumindest teilweise umschließt, wird als Gelenkpfanne bzw. Kugelpfanne bezeichnet. Die kugelähnliche Form kann hierbei eine Kugelform, eine Halbkreisform, eine Eiform, eine Kugelscheibenform oder eine Halbellipsenform aufweisen, ist darauf aber nicht beschränkt. Alternativ kann das Gelenk ein Eigelenk oder ein Sattelgelenk sein, ist darauf aber nicht beschränkt. In einer bevorzugten Ausführungsform kann das Gelenk bereitgestellt sein mittels einer Einbuchtung, welche eine Kugelpfanne (entspricht der Gelenkpfanne) in dem zumindest einen Schnittstellenbereich des Verbindungselements bildet bzw. bereitstellt, und mittels einer Kugelscheibe, welche zumindest teilweise oder vollständig formschlüssig in der Einbuchtung angeordnet ist, wobei die Kugelscheibe mittels eines Befestigungselements in der Einbuchtung gehalten wird.

Der Begriff "Verbindungsvorrichtung" ist vorliegend breit zu verstehen und umfasst jede Vorrichtung, mit welcher das Verbindungselement elektrisch und mechanisch an dem Batteriemodulpol der Batteriemodule befestigt bzw. dazu gekoppelt werden kann. Die Verbindungsvorrichtung kann hierbei eine lösbare oder unlösbare Vorrichtung sein. Die Verbindungsvorrichtung kann einteilig oder mehrteilig ausgebildet sein. Beispielsweise kann eine lösbare Verbindungsvorrichtung, d.h. eine Verbindungsvorrichtung, die beim Lösen nicht beschädigt oder zerstört wird, eine Schraube bzw. eine Schraube-Mutter-Anordnung sein, ist darauf aber nicht beschränkt. Beispielsweise kann eine unlösbare Verbindungsvorrichtung, d.h. eine Verbindungsvorrichtung, welche zum Lösen zerstört oder beschädigt wird, ein Niet sein, ist darauf aber nicht beschränkt

Der Begriff "Toleranzausgleich bei der Montage" ist vorliegend breit zu verstehen und beschreibt einen Ausgleich von z.B. einem abweichenden Abstand, eine abweichende Höhe und/oder eine abweichende räumliche Orientierung von zwei benachbarten Batteriemodulen während deren Anordnung und Montage in einer Batterie bzw. einem Batteriegehäuse. Der Abstand, die Höhe und/oder die räumliche Orientierung weichen hierbei von einem Normal- bzw. Sollabstand, einer Sollhöhe und/oder einer räumlichen Sollorientierung ab. Mit anderen Worten ausgedrückt, beschreibt der Wortlaut "bei der Montage" einen Zustand des Modulverbinders, bei welchem dieser nicht bzw. noch nicht auf einem Modulpol befestigt ist. In diesem Zustand kann das Gelenk, wenn der Modulverbinder nicht mit dem Modulpol verschraubt ist, und damit die Verbindungsvorrichtung kraftlos bewegt werden. Damit kann automatisch die Toleranz der Modulpole ausgeglichen werden. Nach der Montage, d.h. in einem zweiten Zustand, also wenn die Modulverbinder an dem Modulpol fest befestigt ist, d.h. festgezogen oder verschraubt ist, kann die Verbindungsvorrichtung nicht mehr bewegt werden, jedoch behält der Modulverbinder die bei der Montage eingestellten Toleranzausgleich bei. Der zweite Zustand stellt dann eine massive Verbindung für die optimale Stromübertragung bereit.

Das Ausbilden eines Gelenks von der ersten Verbindungsvorrichtung und/oder der zweiten Verbindungsvorrichtung mit dem Verbindungselement ermöglicht das Bereitstellen eines flexiblen Modulverbinders, welcher auch bei kleinen bzw. geringen Längen weiterhin flexibel bleibt und ist. Durch die Flexibilität des Modulverbinders kann ein geeigneter Toleranzausgleich bereitgestellt werden.

In einer weiteren Ausführungsform des erfindungsgemäßen Modulverbinders bildet die erste Verbindungsvorrichtung und die zweite Verbindungsvorrichtung jeweils mit dem Verbindungselement ein Gelenk aus.

Durch die Ausbildung der ersten Verbindungsvorrichtung und der zweiten Verbindungsvorrichtung jeweils mit dem Verbindungselement als ein Gelenk kann ein flexibler Modulverbinder bereitzustellen werden, welcher auch bei kleinen bzw. geringen Längen weiterhin flexibel bleibt und ist. Hinzukommend kann durch die Ausbildung eines Gelenks bei jeder der Verbindungsvorrichtungen ein größtmöglicher Toleranzausgleich bereitgestellt werden. Im Detail kann hiermit ein Toleranzausgleich in X, Y und Z Richtung mit einem Wert ±1 mm bis ±2 mm, insbesondere ±1,5 mm, bereitgestellt werden.

In einer weiteren Ausführungsform des erfindungsgemäßen Modulverbinders ist das Verbindungselement einteilig und massiv ausgeführt.

Der Begriff "massiv" ist vorliegend breit zu verstehen und beschreibt, dass das Verbindungselement aus einem massiven Materialblock, z.B. mittels Fräsens, bereitgestellt wird. Massiv bedeutet somit, dass die Materialdichte des verwendeten Materials für das Verbindungselement im gesamten Körper des Verbindungselements identisch ist.

Durch die einteilige Ausführung des Verbindungselementes kann der Modulverbinder besonders stabil ausgebildet werden und eine höhere Strombelastbarkeit aufweisen. Ferner können durch die einteilige Ausführung des Verbindungselementes die Herstellungskosten des Verbindungselementes reduziert werden.

In einer weiteren Ausführungsform des erfindungsgemäßen Modulverbinders weist die erste Schnittstelle und die zweite Schnittstelle jeweils ein Durchgangsloch auf.

Der Begriff "Durchgangsloch" ist vorliegend breit zu verstehen und definiert eine kreisrunde Durchgangsbohrung. Die Durchgangsbohrung bzw. das Durchgangsloch erstreckt sich von einer ersten Außenseite, insbesondere einer ersten Außenseite der Quaderform, des Verbindungselements zu einer gegenüberliegenden zweiten Außenseite, insbesondere einer zweiten Außenseite der Quaderform, des Verbindungselements. Das Durchgangsloch weist einen Durchmesser, insbesondere einen gleichbleibenden bzw. kontinuierlichen Durchmesser, von 3 mm bis 7 mm auf, ist darauf aber nicht beschränkt. Das Durchgangsloch kann hierbei glatt oder strukturiert sein.

Durch das Bereitstellen der Schnittstellen jeweils als Durchgangsloch kann eine zuverlässige Verbindung von dem Verbindungselement und den Verbindungsvorrichtungen bereitgestellt werden. Ferner kann das Bereitstellen der Schnittstellen kostengünstiger realisiert werden.

In einer weiteren Ausführungsform des erfindungsgemäßen Modulverbinders weist das Verbindungselement einen Mittelbereich, einen ersten Schnittstellenbereich und einen zweiten Schnittstellenbereich auf, wobei der erste Schnittstellenbereich und/oder der zweite Schnittstellenbereich an einer ersten Außenseite eine Einbuchtung aufweist, und wobei die Einbuchtung eine Kugelpfanne bereitstellt.

Der Begriff "Einbuchtung" ist vorliegend breit zu verstehen und umfasst jede Aussparung, welche sich in das Innenvolumen des Verbindungselements erstreckt. Die Einbuchtung bildet eine Kugelpfanne aus. Die Kugelpfanne weist eine halbkugelförmige Aussparung auf, welche sich in das Innenvolumen des Verbindungselements erstreckt. Die Einbuchtung kann vollständig oder zumindest teilweise an einer ersten Außenseite des Verbindungselements bereitgestellt sein. Mit anderen Worten ausgedrückt, können sich Teile der ausgebildeten Kugelpfanne über das Verbindungselement, insbesondere den Körper des Verbindungselements, hinaus erstrecken. In der Einbuchtung kann zentriert bzw. im Zentrum der Einbuchtung bzw. Kugelpfanne, d. h. in dem Bereich der Kugelpfanne, welche sich am meisten in das Innenvolumen des Verbindungselement erstreckt, die entsprechenden Schnittstellen bereitgestellt sein.

Der Begriff "erste Außenseite" ist vorliegend breit zu verstehen und definiert eine Außenseite des Verbindungselementes. Die erste Außenseite des Verbindungselements ist die Außenseite, welche einem Batteriemodul, insbesondere einem Batteriemodulpol zugewandt ist, wenn der Modulverbinder ein erstes Batteriemodul, insbesondere einen ersten Batteriemodulpol, mit einem zweiten Batteriemodul, insbesondere einem zweiten Batteriemodulpol, verbindet.

In einer weiteren Ausführungsform des erfindungsgemäßen Modulverbinders weist die erste Verbindungsvorrichtung und/oder die zweite Verbindungsvorrichtung auf: eine erste Kugelscheibe, wobei die erste Kugelscheibe in der Einbuchtung angeordnet ist. Ferner weist die erste Verbindungsvorrichtung und/oder die zweite Verbindungsvorrichtung ein erstes Befestigungselement, welches durch das Durchgangsloch der ersten Schnittstelle und die erste Kugelscheibe geführt ist, zur elektrischen und mechanischen Verbindung der ersten Schnittstelle mit einem Batteriemodulpol eines ersten Batteriemoduls, und ein zweites Befestigungselement, welches durch das Durchgangsloch der zweiten Schnittstelle geführt ist, zur elektrischen und mechanischen Verbindung der zweiten Schnittstelle mit einem Batteriemodulpol eines zweiten Batteriemoduls, oder ein zweites Befestigungselement, welches durch das Durchgangsloch der zweiten Schnittstelle und die erste Kugelscheibe geführt ist, zur elektrischen und mechanischen Verbindung der zweiten Schnittstelle mit einem Batteriemodulpol eines zweiten Batteriemoduls. Der Durchmesser des Durchgangslochs der ersten Schnittstelle größer ist als der Durchmesser des ersten Befestigungselements, oder der Durchmesser des Durchgangslochs der ersten Schnittstelle größer ist als der Durchmesser des ersten Befestigungselements und der Durchmesser des Durchgangslochs der ersten Schnittstelle größer ist als der Durchmesser des zweiten Befestigungselements.

Der Begriff "erste Kugelscheibe" ist vorliegend breit zu verstehen und definiert einen Ring aus einem Material, z.B. Metall, mit einer kugelförmigen oder halbkugelförmigen Außenfläche. Die Kugelscheibe ist derart ausgebildet, dass diese mit der Kugelpfanne formschlüssig ist. Die Kugelscheibe kann größer als die Einbuchtung in dem Verbindungselement sein, ist darauf aber nicht beschränkt. Alternativ kann die Kugelscheibe auch kleiner als die Einbuchtung in dem Verbindungselement sein. Die Kugelscheibe weist eine zentrierte Durchgangsbohrung bzw. ein zentriertes Durchgangsloch auf. Alternativ kann die Kugelscheibe ein Langloch aufweisen. Durch die Verwendung eines Langlochs in der ersten Kugelscheibe kann die Auflagefläche für das Befestigungselement erhöht werden und ein höherer Querschnitt zur Stromübertragung bereitgestellt werden. Der Durchmesser der Durchgangsbohrung kann größer als ein Durchmesser des Befestigungselements, insbesondere eines Schraubenkörpers, sein, ist darauf aber nicht beschränkt. Die erste Kugelscheibe kann einen ersten Teil und einen zweiten Teil aufweisen. Der erste Teil der Kugelscheibe umfasst vollständig den Ring mit schrägen Außenflächen. Der zweite Teil der Kugelscheibe umfasst eine Erstreckung aus Metall, welche sich von der der schrägen Außenfläche gegenüberliegenden Außenfläche des Rings senkrecht erstreckt. Die Erstreckung kann hierbei eine Länge von 1 mm bis 5 mm aufweisen, ist darauf aber nicht beschränkt. Die Erstreckung kann ebenfalls als ein Ring ausgebildet sein, wobei der Ring ebenfalls eine Durchgangsbohrung aufweist. Der Durchmesser der Durchgangsbohrung des zweiten Teils der ersten Kugelscheibe kann hierbei größer als der Durchmesser der Durchgangsbohrung des ersten Teils der ersten Kugelscheibe sein, ist darauf aber nicht beschränkt.

Der Begriff "geführt" ist vorliegend breit zu verstehen und definiert, dass zumindest ein Teil des Körpers des ersten und/oder zweiten Befestigungselements sich durch die erste Kugelscheibe und das Durchgangsloch der ersten Schnittstelle oder das Durchgangsloch der zweiten Schnittstelle erstreckt, insbesondere vollständig erstreckt.

Durch das Bereitstellen einer ersten Kugelscheibe in der Einbuchtung und durch den geringeren Durchmesser des Befestigungselements als der Durchmesser zumindest eines Durchgangslochs kann ein Gelenk, insbesondere ein einfaches Gelenk, an der ersten Außenseite bereitgestellt werden. Somit kann ein geeigneter Toleranzausgleich bereitgestellt werden.

In einer weiteren Ausführungsform des erfindungsgemäßen Modulverbinders weist das Verbindungselement ferner in dem ersten Schnittstellenbereich und/oder in dem zweiten Schnittstellenbereich an einer zweiten Außenseite eine weitere Einbuchtung auf, wobei die weitere Einbuchtung eine Kugelpfanne bereitstellt.

Der Begriff "weitere Einbuchtung" ist vorliegend breit zu verstehen und umfasst jede Aussparung, welche sich in das Innenvolumen des Verbindungselements erstreckt. Die weitere Einbuchtung bildet eine Kugelpfanne aus. Die Kugelpfanne weist eine halbkugelförmige Aussparung auf, welche sich in das Innenvolumen des Verbindungselements erstreckt. Die weitere Einbuchtung kann vollständig oder zumindest teilweise an einer ersten Außenseite des Verbindungselements bereitgestellt sein. Mit anderen Worten ausgedrückt, können sich Teile der ausgebildeten Kugelpfanne über das Verbindungselement, insbesondere den Körper des Verbindungselements, hinaus erstrecken. In der weiteren Einbuchtung ist zentriert bzw. im Zentrum der Einbuchtung bzw. Kugelpfanne, d. h. in dem Bereich der Kugelpfanne, welche sich am meisten in das Innenvolumen des Verbindungselement erstreckt, die entsprechenden Schnittstellen bereitgestellt. Die weitere Einbuchtung kann identisch oder verschieden zu der Einbuchtung sein.

Der Begriff "zweite Außenseite" ist vorliegend breit zu verstehen und definiert eine Außenseite des Verbindungselementes. Die zweite Außenseite des Verbindungselements ist die Außenseite, welche der ersten Außenseite gegenüberliegend ist und welche einem Batteriemodul, insbesondere einem Batteriemodulpol abgewandt ist, wenn der Modulverbinder ein erstes Batteriemodul, insbesondere einen ersten Batteriemodulpol, mit einem zweiten Batteriemodul, insbesondere einem zweiten Batteriemodulpol, verbindet.

In einer weiteren Ausführungsform des erfindungsgemäßen Modulverbinders weist die erste Verbindungsvorrichtung und/oder die zweite Verbindungsvorrichtung eine erste Kugelscheibe, wobei die erste Kugelscheibe in der Einbuchtung angeordnet ist, und eine zweite Kugelscheibe, wobei die zweite Kugelscheibe in der weiteren Einbuchtung (116) angeordnet ist, auf. Ferner weist die erste Verbindungsvorrichtung und/oder die zweite Verbindungsvorrichtung ein erstes Befestigungselement, welches durch die zweite Kugelscheibe, das Durchgangsloch der ersten Schnittstelle und die erste Kugelscheibe geführt ist, zur elektrischen und mechanischen Verbindung der ersten Schnittstelle mit einem Batteriemodulpol eines ersten Batteriemoduls, und ein zweites Befestigungselement, welches durch das Durchgangsloch der zweiten Schnittstelle geführt ist, zur elektrischen und mechanischen Verbindung der zweiten Schnittstelle mit einem Batteriemodulpol eines zweiten Batteriemoduls, oder ein zweites Befestigungselement, welches durch die zweite Kugelscheibe und das Durchgangsloch der zweiten Schnittstelle geführt ist, zur elektrischen und mechanischen Verbindung der zweiten Schnittstelle mit einem Batteriemodulpol eines zweiten Batteriemoduls, oder ein zweites Befestigungselement, welches durch die zweite Kugelscheibe, das Durchgangsloch der zweiten Schnittstelle und die erste Kugelscheibe geführt ist, zur elektrischen und mechanischen Verbindung der zweiten Schnittstelle mit einem Batteriemodulpol des zweiten Batteriemoduls, wobei der Durchmesser des Durchgangslochs der ersten Schnittstelle größer ist als der Durchmesser des ersten Befestigungselements, oder wobei der Durchmesser des Durchgangslochs (140) der ersten Schnittstelle größer ist als der Durchmesser des ersten Befestigungselements und der Durchmesser des Durchgangslochs der ersten Schnittstelle größer ist als der Durchmesser des zweiten Befestigungselements.

Der Begriff "zweite Kugelscheibe" ist vorliegend breit zu verstehen und definiert einen Ring aus einem Material, z.B. Metall, mit einer schrägen Außenfläche. Die zweite Kugelscheibe ist derart ausgebildet, dass diese mit der Kugelpfanne formschlüssig ist. Die zweite Kugelscheibe kann größer als die weitere Einbuchtung in dem Verbindungselement sein, ist darauf aber nicht beschränkt. Alternativ kann die zweite Kugelscheibe auch kleiner als die weitere Einbuchtung in dem Verbindungselement sein. Die zweite Kugelscheibe weist eine zentrierte Durchgangsbohrung bzw. ein zentriertes Durchgangsloch auf. Alternativ kann die Kugelscheibe ein Langloch aufweisen. Durch die Verwendung eines Langlochs in der ersten Kugelscheibe kann die Auflagefläche für das Befestigungselement erhöht werden und ein höherer Querschnitt zur Stromübertragung bereitgestellt werden. Der Durchmesser der Durchgangsbohrung der zweiten Kugelscheibe kann größer als ein Durchmesser des Befestigungselements, insbesondere eines Schraubenkörpers, sein. Die erste Kugelscheibe kann einen ersten Teil und einen zweiten Teil aufweisen. Der erste Teil der Kugelscheibe umfasst vollständig den Ring mit schrägen Außenflächen. Der zweite Teil der Kugelscheibe umfasst eine Erstreckung aus Metall, welche sich von der der schrägen Außenfläche gegenüberliegenden Außenfläche des Rings senkrecht erstreckt. Die Erstreckung kann hierbei eine Länge von 1 mm bis 5 mm aufweisen, ist darauf aber nicht beschränkt. In einer bevorzugten Ausführungsform weist die erste Kugelscheibe lediglich einen ersten Teil auf. Die erste Kugelscheibe und die zweite Kugelscheibe können hierbei identisch oder verschieden sein.

Der Begriff "geführt" ist vorliegend breit zu verstehen und definiert, dass zumindest ein Teil des Körpers des ersten und/oder zweiten Befestigungselements sich durch die erste Kugelscheibe, die zweite Kugelscheibe und/oder das Durchgangsloch der ersten Schnittstelle oder das Durchgangsloch der zweiten Schnittstelle erstreckt, insbesondere vollständig erstreckt.

Durch das Bereitstellen einer ersten Kugelscheibe in der Einbuchtung, einer zweiten Kugelscheibe in der weiteren Einbuchtung und durch den geringeren Durchmesser der Befestigungselemente als der Durchmesser Durchgangslöcher kann jeweils zumindest ein Gelenk an der ersten Außenseite und an der zweiten Außenseite bereitgestellt werden. Somit kann ein Doppelgelenk bereitgestellt werden, mit welchem ein geeigneter Toleranzausgleich bereitgestellt werden kann und bei welchem die Kontaktflächen immer parallel zueinander bleiben.

In einer weiteren Ausführungsform des erfindungsgemäßen Modulverbinders ist das erste Befestigungselement und/oder das zweite Befestigungselement eine Schraube.

Eine Schraube weist einen Schraubenkopf und einen Schraubenkörper auf. An dem Schraubenkörper kann vollständig oder zumindest teilweise ein Gewinde bereitgestellt sein.

Durch die Verwendung einer Schraube kann eine lösbare Verbindungsvorrichtung bereitgestellt werden.

In einer weiteren Ausführungsform des erfindungsgemäßen Modulverbinders ist das Verbindungselement aus Kupfer oder Aluminium bereitgestellt.

Hinzukommend kann der Modulverbinder mit einer Oberflächenbeschichtung versehen sein. Durch die Verwendung einer Oberflächenbeschichtung kann eine geeignete elektrische Leitfähigkeit bereitgestellt werden. Eine Oberflächenbeschichtung kann aus Zinn, Nickel oder Silber bestehen, ist darauf aber nicht beschränkt.

Durch die Verwendung von Kupfer oder Aluminium für das Verbindungselement kann eine geeignete elektrische Leitfähigkeit bereitgestellt werden.

In einer weiteren Ausführungsform des erfindungsgemäßen Modulverbinders ist die erste Kugelscheibe aus demselben Material wie das Verbindungselement bereitgestellt ist.

Alternativ kann die erste Kugelscheibe und das Verbindungselement aus demselben Material wie ein Batteriemodulpol des ersten oder zweiten Batteriemoduls bereitgestellt werden.

Durch das Bereitstellen der ersten Kugelscheibe und des Verbindungselements aus demselben Material kann eine verbesserte, insbesondere unbeeinflusste, Leitfähigkeit des Modulverbinders bereitgestellt werden. Ferner kann ein verbesserter, insbesondere unbeeinflusster, Stromfluss durch den Modulverbinder bereitgestellt werden.

In einer weiteren Ausführungsform des erfindungsgemäßen Modulverbinders ist die zweite Kugelscheibe aus Stahl bereitgestellt.

Alternativ können die erste Kugelscheibe und die zweite Kugelscheibe aus demselben Material bereitgestellt sein.

Durch das Bereitstellen der zweiten Kugelscheibe aus Stahl kann eine zuverlässige Befestigung des Modulverwenders an den Batteriemodulen bereitgestellt werden.

Hinzukommend kann in einer Ausführungsform der Modulverbinder, insbesondere das Verbindungselement eine Ummantelung aufweisen, welche elektrisch isolierenden ist.

Der Begriff Ummantelung ist vorliegend breit zu verstehen und umfasst alle Vorrichtungen bzw. Schichten, welche die Modulverbinder, insbesondere das Verbindungselement vollständig, d. h. bis auf die Schnittstellen, oder zumindest teilweise bedeckt, umgibt, umhüllt, und/oder darum herum angeordnet ist. Die Ummantelung kann in direktem Kontakt oder beabstandet zu dem Verbindungselement angeordnet sein. Die Ummantelung kann aus einem elektrisch isolierenden Material bestehen, ist darauf aber nicht beschränkt. Die Ummantelung kann einstückig, mehrstückig, einlagig oder mehrlagig ausgebildet sein, wobei die einzelnen Stücke bei einer mehrstückigen Ausbildung der Ummantelung direkt in Kontakt miteinander sind bzw. aneinandergrenzen oder beabstandet voneinander angeordnet sein können. Die Ummantelung kann aus einem Kunststoff, insbesondere einem halogenfreien, nicht-brennbaren, schwer entflammbaren und/oder flammenhindernden Material bestehen. Ein vorteilhaftes Material erfüllt die Flammschutzklasse V0 der UL 94 Flamm-Klassifikation. Beispielhafte Materialien sind Polypropylen und thermoplastische Elastomere.

Durch das Ummanteln des Modulverwenders, insbesondere des Verbindungselements, mit einem elektrisch isolierenden Material kann das Auftreten von Kurzschlüssen an den Modulverbindern innerhalb der Batterie reduziert werden.

Ferner ist eine erfindungsgemäße Batterie präsentiert. Diese weist zumindest zwei Batteriemodule und zumindest einen Modulverbinder wie oben offenbart auf zum elektrischen und mechanischen Verbinden der zumindest zwei Batteriemodule.

Ferner ist ein erfindungsgemäßes Fahrzeug präsentiert. Dieses weist eine Batterie wie oben offenbart auf.

Eine erfindungsgemäße Verwendung eines Modulverbinders mit Verwendung eines Modulverbinders mit zumindest einem Gelenk wie oben offenbart zum Toleranzausgleich.

### Beschreibung der bevorzugten Ausführungsformen

Nachfolgend wird eine detaillierte Beschreibung der Figuren gegeben, darin ist zeigt
- **Figur 1**: eine schematische Ansicht eines Modulverbinders;
- **Figur 2**: eine schematische Schnittansicht eines Modulverbinders;
- **Figur 3**: eine schematische Draufsicht auf einen Modulverbinder im Toleranzausgleich in X- und in Y-Richtung;
- **Figur 4**: eine schematische Seitenansicht auf einen Modulverbinder im Toleranzausgleich in Z-Richtung;
- **Figur 5**: eine schematische Schnittansicht eines Modulverbinders im Toleranzausgleich in Z-Richtung;
- **Figur 6**: eine schematische Schnittansicht einer Batterie;
- **Figur 7**: eine schematische Ansicht eines Fahrzeugs.

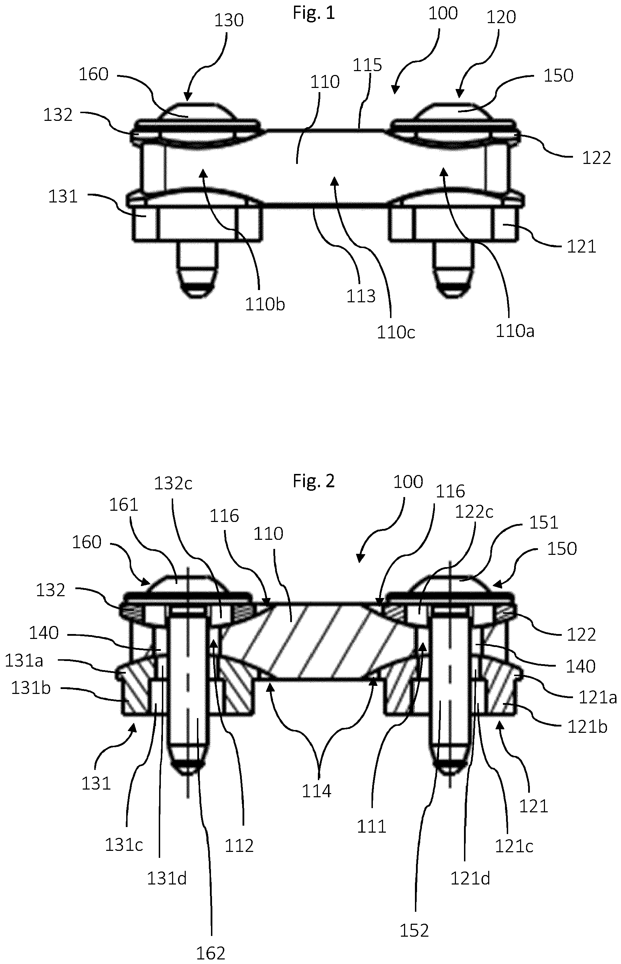

Figur 1 zeigt eine schematische Ansicht eines Modulverbinders. Der Modulverbinder 100 weist ein Verbindungselement 110 auf. Das Verbindungselement 110 ist einteilig ausgebildet und besteht vollständig aus Kupfer. Das Verbindungselement 110 hat die Form eines Quaders. Das Verbindungselement 110 ist mittels einer ersten Verbindungsvorrichtung 120 an einem ersten Batteriemodulpol eines ersten Batteriemoduls (nicht gezeigt) befestigt bzw. befestigbar und mittels einer zweiten Verbindungsvorrichtung 130 an einem zweiten Batteriemodulpol eines zweiten Batteriemoduls (nicht gezeigt) befestigt bzw. befestigbar. Die erste Verbindungsvorrichtung 120 ist in dem ersten Schnittstellenbereich 110a bereitgestellt. Die zweite Verbindungsvorrichtung 130 ist in dem zweiten Schnittstellenbereich 110b bereitgestellt. Zwischen den Schnittstellenbereichen 110a, 110b ist ein Mittelabschnitt 110c bereitgestellt, welche die beiden Schnittstellenbereiche 110a, 110b räumlich voneinander trennt bzw. beabstandet. Die Schnittstellenbereiche 110a, 110b können in den Randregionen, d.h. in den Regionen, welche am meist entferntesten voneinander sind, des Verbindungselements 110 bereitgestellt sein. Die erste Verbindungsvorrichtung 120 ist bereitgestellt durch ein erstes Befestigungselement 150, eine zweite Kugelscheibe 122 und eine erste Kugelscheibe 121. Die ersten Kugelscheiben 121 ist in Einbuchtungen 114 bereitgestellt. Die zweiten Kugelscheiben 122 sind in weiteren Einbuchtungen 116 bereitgestellt. Das erste Befestigungselement 150 ist eine Schraube, welche einen Schraubenkopf 151 und einen Schraubenkörper 152 aufweist. Der Schraubenkörper 152 des ersten Befestigungselements 150 erstreckt sich hierbei vollständig durch die zweite Kugelscheibe 122, das Verbindungselement 110 und der ersten Kugelscheibe 121 von einer zweiten Außenseite 115 zu einer ersten Außenseite 113 des Verbindungselements 110. Ein Gewindebereich des Schraubenkörpers 152 des ersten Befestigungselements 150 ragt über die erste Kugelscheibe 121 hinaus, um z.B. in einen Batteriemodulpol eines Batteriemoduls (nicht gezeigt) eingeschraubt zu werden. Die zweite Verbindungsvorrichtung 130 ist bereitgestellt durch ein zweites Befestigungselement 160, eine zweite Kugelscheibe 132 und eine erste Kugelscheibe 131. Die ersten Kugelscheiben 131 sind in Einbuchtungen 114 bereitgestellt. Die zweiten Kugelscheibe 132 sind in weiteren Einbuchtungen 116 bereitgestellt. Das zweite Befestigungselement 160 ist ebenfalls eine Schraube, welche einen Schraubenkopf 162 und einen Schraubenkörper 161 aufweist. Das erste Befestigungselement 150 und das zweite Befestigungselement 160 sind hierbei identisch, d.h. weisen die gleiche Länge und Größe auf. Der Schraubenkörper 161 des zweiten Befestigungselements 160 erstreckt sich ebenfalls vollständig durch die zweite Kugelscheibe 132, das Verbindungselement 110 und der ersten Kugelscheibe 131 von einer zweiten Außenseite 115 zu einer ersten Außenseite 113 des Verbindungselements 110. Ein Gewindebereich des Schraubenkörpers 161 des zweiten Befestigungselements 160 ragt über die erste Kugelscheibe 131 hinaus, um z.B. in einen Batteriemodulpol eines Batteriemoduls (nicht gezeigt) eingeschraubt zu werden.

Figur 2 zeigt eine schematische Schnittansicht des Modulverbinders 100 wie bereits in Figur 1 dargestellt. Wie zuvor schon beschrieben, weist das Verbindungselement 110 einen ersten Schnittstellenbereich 110a, in dem eine erste Schnittstelle 111 bereitgestellt ist, und einen zweiten Schnittstellenbereich 110b, in dem eine zweite Schnittstelle 112 bereitgestellt ist, auf. Zwischen diesen beiden Bereichen ist ein Mittelbereich 110c bereitgestellt, welche die beiden Schnittstellenbereiche 110a, 110b räumlich voneinander trennt bzw. beabstandet. Die erste Schnittstelle 111 und die zweite Schnittstelle 112 sind beide als Durchgangsbohrung 140 bzw. als ein Durchgangsloch mit glatten Wänden bereitgestellt. Die erste Schnittstelle 111 und die zweite Schnittstelle 112 weisen hierbei demselben Durchmesser auf, können aber auch unterschiedlich bzw. verschieden sein. In den Schnittstellenbereichen 110a, 110b, in welchen die erste Schnittstelle 111 und die zweite Schnittstelle 112 bereitgestellt sind, sind an einer ersten Außenseite 113 und an einer zweiten Außenseite 115 jeweils Einbuchtungen 114 und weitere Einbuchtungen 116, respektive, bereitgestellt. Die Einbuchtungen 114 und die weiteren Einbuchtungen 116 sind unterschiedlich, können jedoch auch identisch ausgebildet sein. Die Einbuchtungen 114 erstreckt sich tiefer in das Innenvolumen des Verbindungselement 110 als die weiteren Einbuchtungen 116. Die Einbuchtungen 114 und die weiteren Einbuchtungen 116 sind hierbei als Kugelpfannen ausgebildet. In die Einbuchtungen 114 und die weiteren Einbuchtungen 116 sind jeweils erste Kugelscheiben 121,131 und zweite Kugelscheiben 122 und 132, respektive, angeordnet. Die Kugelscheiben sind hierbei mit den jeweiligen Einbuchtungen formschlüssig und stellen jeweils ein Gelenk dar bzw. bereit. Die ersten Kugelscheiben 121, 131 und zweiten Kugelscheiben 122, 132 sind nicht identisch. Die ersten Kugelscheiben 121, 131 sind aus Kupfer hergestellt bzw. bereitgestellt. Somit sind die ersten Kugelscheiben 121, 131 aus demselben Material wie das Verbindungselement 110 bereitgestellt. Die ersten Kugelscheiben 121, 131 weisen eine Durchgangsbohrung 121c, 131c auf. Die zweiten Kugelscheiben 122, 132 weisen eine Durchgangsbohrung 122c, 132c auf. Die Durchgangsbohrungen 121c, 131c der ersten Kugelscheiben 121, 131 sind identisch und haben einen kleineren Durchmesser als die Durchgangsbohrungen 122c, 132c der zweiten Kugelscheiben 122, 132 und der Durchgangsbohrungen 140 der Schnittstellen 111 und 112. Die ersten Kugelscheiben 121,131 weisen einen ersten Teil 121a, 131a und einen zweiten Teil 121b, 131b auf. Der erste Teil 121a, 131a der ersten Kugelscheiben 121,131 umfassen vollständig den Ring mit schrägen Außenflächen. Der erste Teil 121a, 131a der ersten Kugelscheiben 121,131 umfasst ein Durchgangsloch 121d, 131d, welches zentriert angeordnet ist. Der zweite Teil 121b, 131b der ersten Kugelscheiben 121,131 umfassen eine Erstreckung aus Metall, welche sich von der der schrägen Außenfläche gegenüberliegenden Außenfläche des Rings senkrecht erstreckt. Die Erstreckung ist hierbei ebenfalls als ein Ring ausgebildet. Der Ring der Erstreckung weist ein Durchgangsloch 121c, 131c auf. Die zweiten Kugelscheiben 122,132 sind aus Stahl hergestellt. Die zweiten Kugelscheiben 122,132 weisen eine Durchgangsbohrung 122c, 132c auf. Der Schraubenkopf 151, 161 des ersten Befestigungselements 150 und das zweiten Befestigungselements 160 hat hierbei einen größeren Durchmesser als die Durchgangsbohrung 122c, 132c der zweiten Kugelscheiben 122,132. Der Durchmesser des Durchgangslochs 122c, 132c der zweiten Kugelscheibe 122, 132 ist größer als der Durchmesser des Durchgangslochs 140 der Schnittstellen 111, 112, der Durchmesser des Durchgangslochs 121d, 131d des ersten Teils der ersten Kugelscheibe 121, 131 und des Durchgangslochs 121c, 131c des zweiten Teils der ersten Kugelscheibe 121, 131, ist darauf aber nicht beschränkt. Der Durchmesser des Durchgangsloch 140 der Schnittstellen 111, 112 ist größer als der Durchmesser des Durchgangslochs 121d, 131d des ersten Teils der ersten Kugelscheibe 121, 131, aber kleiner als der Durchmesser des Durchgangslochs 121c, 131c des zweiten Teils der ersten Kugelscheibe 121, 131 und des Durchgangslochs 122c, 132c der zweiten Kugelscheibe 122, 132, ist darauf aber nicht beschränkt. Der Durchmesser des Durchgangslochs 121d, 131d des ersten Teils der ersten Kugelscheibe 121, 131 ist kleiner als der Durchmesser des Durchgangslochs 122c, 132c der zweiten Kugelscheibe 122, 132, der Durchmesser des Durchgangslochs 140 der Schnittstellen 111, 112, der Durchmesser des Durchgangslochs 121c, 131c des zweiten Teils der ersten Kugelscheibe 121, 131, ist drauf aber nicht beschränkt. Der Durchmesser des Durchgangslochs 121c, 131c des zweiten Teils der ersten Kugelscheibe 121, 131 ist größer als der Durchmesser des Durchgangslochs 140 der Schnittstellen 111, 112 und der Durchmesser des Durchgangslochs 121d, 131d des ersten Teils der ersten Kugelscheibe 121, 131, aber kleiner als der Durchmesser des Durchgangslochs 122c, 132c der zweiten Kugelscheibe 122, 132, ist darauf aber nicht beschränkt. Der Durchmesser des Schraubenkörpers 162 ist kleiner als der Durchmesser des Durchgangslochs 122c, 132c der zweiten Kugelscheibe 122, 132, der Durchmesser des Durchgangslochs 140 der Schnittstellen 111, 112, der Durchmesser des Durchgangslochs 121d, 131d des ersten Teils der ersten Kugelscheibe 121, 131 und der Durchmesser des Durchgangslochs 121c, 131c des zweiten Teils der ersten Kugelscheibe 121, 131. Die ersten Kugelscheiben 121, 131 sind größer als die erste Einbuchtung 114, sodass diese die erste Einbuchtung 114 zumindest teilweise überragen. Die zweiten Kugelscheiben 122, 132 sind größer als die zweite Einbuchtung 116, sodass diese die zweite Einbuchtung 116 zumindest teilweise überragen.

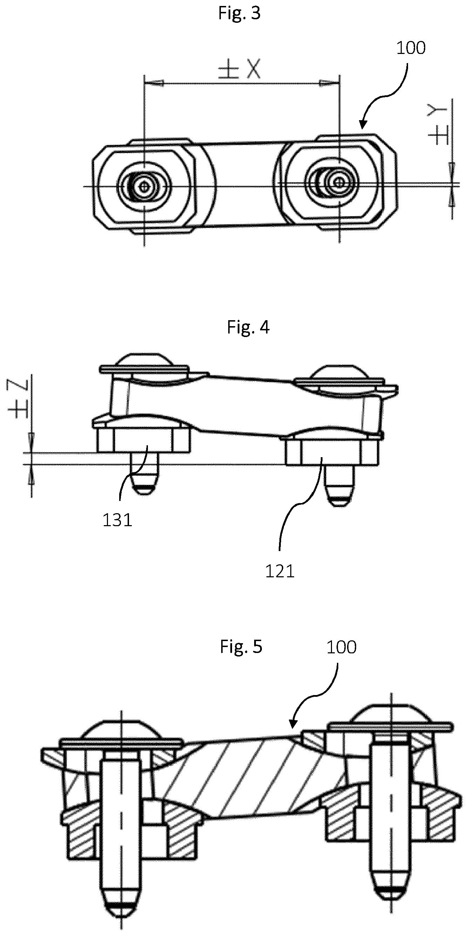

Figur 3 zeigt eine schematische Draufsicht auf einen Modulverbinder 100 im Toleranzausgleich in X- und in Y-Richtung. Der Abstand X der beiden Befestigungselemente 150 und 160 kann hierbei in einem Bereich von ±1,5 mm liegen, wodurch ein gewünschter Toleranzausgleich in X-Richtung bereitgestellt wird. Der Abstand Y der beiden Befestigungselemente 150 und 160 kann hierbei in einem Bereich von ±1,5 mm liegen, wodurch ein gewünschter Toleranzausgleich in Y-Richtung bereitgestellt wird

Figur 4 zeigt eine schematische Seitenansicht auf einen Modulverbinder 100 im Toleranzausgleich in Z-Richtung. Durch die Verwendung der Gelenke, insbesondere der Kugelgelenke bestehend aus den Kugelpfannen und den Kugelscheiben, kann ein gewünschter Toleranzausgleich in Z-Richtung bereitgestellt werden. Der Toleranzausgleich in Z-Richtung kann ±1,5 mm betragen. Hierbei ist ersichtlich, dass die dem ersten Teil der ersten Kugelscheiben abgewandten Außenflächen der Erstreckung des zweiten Teils der ersten Kugelscheiben zueinander parallel angeordnet sind. Damit kann eine bestmögliche Kontaktierung der zu verbindenden Elemente bereitgestellt werden.

Figur 5 zeigt eine schematische Schnittansicht eines Modulverbinders 100 im Toleranzausgleich in Z-Richtung. Hierbei ist gut erkennbar, wie der Toleranzbereich durch den Modulverbinder 100 bereitgestellt werden kann. In Detail wird der Toleranzausgleich bereitgestellt, indem sich in einem nicht verschraubten Zustand des Modulverbinders 100, d.h. wenn der Modulverbinder 100 nicht z.B. auf einem Batteriemodul geschraubt ist, die ersten Kugelscheiben, die zweiten Kugelscheiben und/oder Befestigungselemente derart bewegen, anordnen oder ausrichten können, damit der gewünschte bzw. benötigte Toleranzbereich durch den Modulverbinder 100 bereitgestellt werden kann und die dem ersten Teil der ersten Kugelscheiben abgewandten Außenflächen der Erstreckung des zweiten Teils der ersten Kugelscheiben zueinander parallel angeordnet sind.

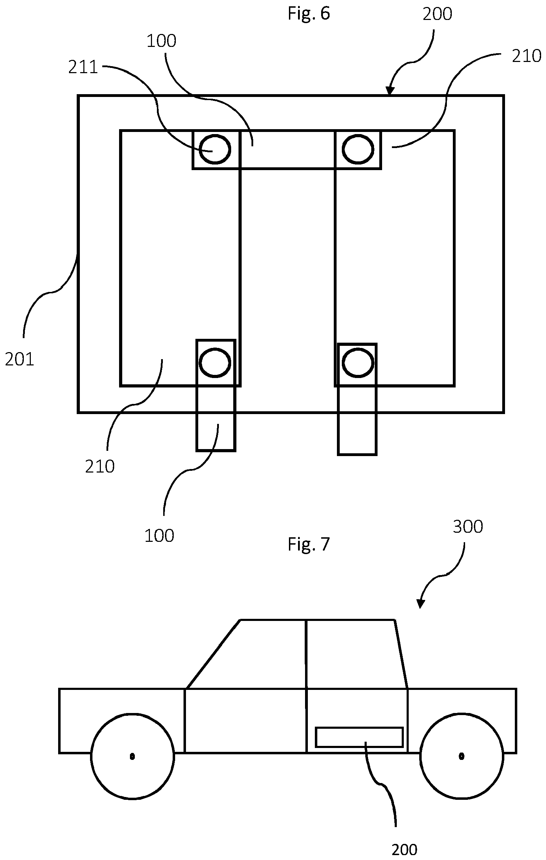

Figur 6 zeigt eine schematische Ansicht einer Batterie. Die Batterie 200 weist ein Gehäuse 201 auf. Innerhalb des Gehäuses 201 sind eine Mehrzahl, d.h. zwei, von Batteriemodule 210 angeordnet, positioniert und/oder befestigt. Modulverbinder 100 sind bereitgestellt, z.B. um Batteriemodulpole 211 mit identischer Polung von zwei benachbarten Batteriemodulen 210 zu verbinden oder die Batteriemodule 210 mit einem weiteren elektrisch leitenden Element zu verbinden.

Figur 7 zeigt eine schematische Ansicht eines Fahrzeugs. Das Fahrzeug 300 weist eine Batterie 200 auf. Das Fahrzeug ist ein Kraftfahrzeug, ein Elektrofahrzeug oder ein Hybridfahrzeug.

Die vorliegende Erfindung ist dabei allerdings nicht auf die vorhergehenden bevorzugten Ausführungsbeispiele beschränkt, solange sie vom Gegenstand der folgenden Ansprüche umfasst ist. Ergänzend wird darauf hingewiesen, dass die Begriffe "umfassend" und "aufweisend" keine anderen Elemente oder Schritte ausschließen und die unbestimmten Artikel "eine" oder "ein" keine Vielzahl ausschließen. Darüber hinaus wird darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können.

### Bezugszeichenliste

- 100: Modulverbinder
- 110: Verbindungselement
- 110a: erste Schnittstellenbereich
- 110b: zweite Schnittstellenbereich
- 110c: Mittelbereich
- 111: erste Schnittstelle
- 112: zweite Schnittstelle
- 113: erste Außenseite
- 114: Einbuchtung
- 115: zweite Außenseite
- 116: weitere Einbuchtung
- 120: erste Verbindungsvorrichtung
- 121: erste Kugelscheibe
- 121a: erster Teil
- 121b: zweiter Teil
- 121c: Durchgangsloch
- 121d: Durchgangsloch
- 122: zweite Kugelscheibe
- 122c: Durchgangsloch
- 130: zweite Verbindungsvorrichtung
- 131: erste Kugelscheibe
- 131a: erster Teil
- 131b: zweiter Teil
- 131c: Durchgangsloch
- 131d: Durchgangsloch
- 132: zweite Kugelscheibe
- 132c: Durchgangsloch
- 140: Durchgangsloch
- 150: erstes Befestigungselement
- 151: Schraubenkopf
- 152: Schraubenkörper
- 160: zweites Befestigungselement
- 161: Schraubenkopf
- 162: Schraubenkörper
- 200: Batterie
- 201: Gehäuse
- 210: Batteriemodule
- 211: Batteriemodulpol
- 300: Fahrzeug

## Patentansprüche

1. Ein Modulverbinder (100) zum elektrischen und mechanischen Verbinden von Batteriemodulen, aufweisend:
ein Verbindungselement (110);
eine erste Verbindungsvorrichtung (120); und
eine zweite Verbindungsvorrichtung (130),
wobei das Verbindungselement (110) eine erste Schnittstelle (111) und eine zweite Schnittstelle (112) aufweist,
wobei die erste Schnittstelle (111) mittels der ersten Verbindungsvorrichtung (120) mit einem ersten Batteriemodul mechanisch und elektrisch verbindbar ist;
wobei die zweite Schnittstelle (112) mittels der zweiten Verbindungsvorrichtung (130) mit einem zweiten Batteriemodul mechanisch und elektrisch verbindbar ist;
wobei zumindest eine von der ersten Verbindungsvorrichtung (120) und der zweiten Verbindungsvorrichtung (130) mit dem Verbindungselement (110) ein Gelenk ausgebildet zum Bereitstellen eines geometrischen Toleranzausgleichs bei der Montage.

2. Der Modulverbinder (100) gemäß Anspruch 1,
wobei die erste Verbindungsvorrichtung (120) und die zweite Verbindungsvorrichtung (130) jeweils mit dem Verbindungselement (110) ein Gelenk ausbilden.

3. Der Modulverbinder (100) gemäß irgendeinem der vorherigen Ansprüche,
wobei das Verbindungselement (110) einteilig und massiv ausgeführt ist.

4. Der Modulverbinder (100) gemäß irgendeinem der vorherigen Ansprüche,
wobei die erste Schnittstelle (111) und die zweite Schnittstelle (112) jeweils ein Durchgangsloch (140) aufweist.

5. Der Modulverbinder (100) gemäß irgendeinem der vorherigen Ansprüche,
wobei das Verbindungselement (110) einen Mittelbereich (110c), einen ersten Schnittstellenbereich (110a) und einen zweiten Schnittstellenbereich (110b) aufweist,
wobei der erste Schnittstellenbereich (110a) und/oder der zweite Schnittstellenbereich (110b) an einer ersten Außenseite (113) eine Einbuchtung (114) aufweist,
wobei die Einbuchtung (114) eine Kugelpfanne bereitstellt.

6. Der Modulverbinder (100) gemäß Anspruch 4 und 5,
wobei die erste Verbindungsvorrichtung (120) und/oder die zweite Verbindungsvorrichtung (130) aufweisen:
eine erste Kugelscheibe (121, 131),
wobei die erste Kugelscheibe (121, 131) in der Einbuchtung (114) angeordnet ist, und
ein erstes Befestigungselement (150), welches durch das Durchgangsloch (140) der ersten Schnittstelle (111) und die erste Kugelscheibe (121) geführt ist, zur elektrischen und mechanischen Verbindung der ersten Schnittstelle (111) mit einem Batteriemodulpol eines ersten Batteriemoduls, und
ein zweites Befestigungselement (160), welches durch das Durchgangsloch (140) der zweiten Schnittstelle (112) geführt ist, zur elektrischen und mechanischen Verbindung der zweiten Schnittstelle (112) mit einem Batteriemodulpol eines zweiten Batteriemoduls, oder
ein zweites Befestigungselement (160), welches durch das Durchgangsloch (140) der zweiten Schnittstelle (112) und die erste Kugelscheibe (131) geführt ist, zur elektrischen und mechanischen Verbindung der zweiten Schnittstelle (112) mit einem Batteriemodulpol eines zweiten Batteriemoduls,
wobei der Durchmesser des Durchgangslochs (140) der ersten Schnittstelle (111) größer ist als der Durchmesser des ersten Befestigungselements (150), oder
wobei der Durchmesser des Durchgangslochs (140) der ersten Schnittstelle (111) größer ist als der Durchmesser des ersten Befestigungselements (150) und der Durchmesser des Durchgangslochs (140) der ersten Schnittstelle (112) größer ist als der Durchmesser des zweiten Befestigungselements (160).

7. Der Modulverbinder (100) gemäß irgendeinem der Ansprüche 4 und 5,
wobei das Verbindungselement (110) ferner in dem ersten Schnittstellenbereich (110a) und/oder in dem zweiten Schnittstellenbereich (110b) an einer zweiten Außenseite (115) eine weitere Einbuchtung (116) aufweist,
wobei die weitere Einbuchtung (116) eine Kugelpfanne bereitstellt.

8. Der Modulverbinder (100) gemäß Anspruch 7,
wobei die erste Verbindungsvorrichtung (120) und/oder die zweite Verbindungsvorrichtung (130) aufweist:
eine erste Kugelscheibe (121, 131),
wobei die erste Kugelscheibe (121, 131) in der Einbuchtung (114) angeordnet ist, und
eine zweite Kugelscheibe (122, 132),
wobei die zweite Kugelscheibe (122, 132) in der weiteren Einbuchtung (116) angeordnet ist, und
ein erstes Befestigungselement (150), welches durch die zweite Kugelscheibe (122), das Durchgangsloch (140) der ersten Schnittstelle (111) und die erste Kugelscheibe (121) geführt ist, zur elektrischen und mechanischen Verbindung der ersten Schnittstelle (111) mit einem Batteriemodulpol eines ersten Batteriemoduls, und
ein zweites Befestigungselement (160), welches durch das Durchgangsloch (140) der zweiten Schnittstelle (112) geführt ist, zur elektrischen und mechanischen Verbindung der zweiten Schnittstelle (112) mit einem Batteriemodulpol eines zweiten Batteriemoduls, oder
ein zweites Befestigungselement (160), welches durch die zweite Kugelscheibe (132) und das Durchgangsloch (140) der zweiten Schnittstelle (112) geführt ist, zur elektrischen und mechanischen Verbindung der zweiten Schnittstelle (112) mit einem Batteriemodulpol eines zweiten Batteriemoduls, oder
ein zweites Befestigungselement (160), welches durch die zweite Kugelscheibe (132), das Durchgangsloch (140) der zweiten Schnittstelle (112) und die erste Kugelscheibe (131) geführt ist, zur elektrischen und mechanischen Verbindung der zweiten Schnittstelle (112) mit einem Batteriemodulpol des zweiten Batteriemoduls,
wobei der Durchmesser des Durchgangslochs (140) der ersten Schnittstelle (111) größer ist als der Durchmesser des ersten Befestigungselements (150), oder
wobei der Durchmesser des Durchgangslochs (140) der ersten Schnittstelle (111) größer ist als der Durchmesser des ersten Befestigungselements (150) und der Durchmesser des Durchgangslochs (140) der ersten Schnittstelle (112) größer ist als der Durchmesser des zweiten Befestigungselements (160).

9. Der Modulverbinder (100) gemäß einem der Ansprüche 6 oder 8,
wobei das erste Befestigungselement (150) und/oder das zweite Befestigungselement (160) eine Schraube ist.

10. Der Modulverbinder (100) gemäß irgendeinem der vorherigen Ansprüche,
wobei das Verbindungselement (110) aus Kupfer oder Aluminium bereitgestellt ist.

11. Der Modulverbinder (100) gemäß irgendeinem der Ansprüche 6 bis 9,
wobei die erste Kugelscheibe (121, 131) aus demselben Material wie das Verbindungselement (110) bereitgestellt ist.

12. Der Modulverbinder (100) gemäß irgendeinem der Ansprüche 8 oder 9,
wobei die zweite Kugelscheibe (122, 132) aus Stahl bereitgestellt ist.

13. Eine Batterie (200) aufweisend:
zumindest zwei Batteriemodule (210); und
zumindest ein Modulverbinder (100) gemäß Anspruch 1 bis 12 zum elektrischen und mechanischen Verbinden der zumindest zwei Batteriemodule (210).

14. Ein Fahrzeug (300) aufweisend eine Batterie (200) gemäß Anspruch 13.

15. Verwendung eines Modulverbinders (100) mit zumindest einem Gelenk gemäß einem der Ansprüche 1 bis 12 zum Toleranzausgleich.

## Geänderte Patentansprüche

### Geänderte Patentansprüche gemäss Regel 137(2) EPÜ.

1. Ein Modulverbinder (100) zum elektrischen und mechanischen Verbinden von Batteriemodulen, aufweisend:
ein Verbindungselement (110);
eine erste Verbindungsvorrichtung (120); und
eine zweite Verbindungsvorrichtung (130),
wobei das Verbindungselement (110) eine erste Schnittstelle (111) und eine zweite Schnittstelle (112) aufweist,
wobei die erste Schnittstelle (111) mittels der ersten Verbindungsvorrichtung (120) mit einem ersten Batteriemodul mechanisch und elektrisch verbindbar ist;
wobei die zweite Schnittstelle (112) mittels der zweiten Verbindungsvorrichtung (130) mit einem zweiten Batteriemodul mechanisch und elektrisch verbindbar ist;
wobei zumindest eine von der ersten Verbindungsvorrichtung (120) und der zweiten Verbindungsvorrichtung (130) mit dem Verbindungselement (110) ein Gelenk ausgebildet zum Bereitstellen eines geometrischen Toleranzausgleichs bei der Montage,
wobei die erste Verbindungsvorrichtung (120) und die zweite Verbindungsvorrichtung (130) jeweils mit dem Verbindungselement (110) ein Gelenk ausbilden; und
wobei das Verbindungselement (110) einteilig und massiv ausgeführt ist.

2. Der Modulverbinder (100) gemäß irgendeinem der vorherigen Ansprüche, wobei die erste Schnittstelle (111) und die zweite Schnittstelle (112) jeweils ein Durchgangsloch (140) aufweist.

3. Der Modulverbinder (100) gemäß irgendeinem der vorherigen Ansprüche,
wobei das Verbindungselement (110) einen Mittelbereich (110c), einen ersten Schnittstellenbereich (110a) und einen zweiten Schnittstellenbereich (110b) aufweist,
wobei der erste Schnittstellenbereich (110a) und/oder der zweite Schnittstellenbereich (110b) an einer ersten Außenseite (113) eine Einbuchtung (114) aufweist,
wobei die Einbuchtung (114) eine Kugelpfanne bereitstellt.

4. Der Modulverbinder (100) gemäß Anspruch 2 und 3,
wobei die erste Verbindungsvorrichtung (120) und/oder die zweite Verbindungsvorrichtung (130) aufweisen:
eine erste Kugelscheibe (121, 131),
wobei die erste Kugelscheibe (121, 131) in der Einbuchtung (114) angeordnet ist, und
ein erstes Befestigungselement (150), welches durch das Durchgangsloch (140) der ersten Schnittstelle (111) und die erste Kugelscheibe (121) geführt ist, zur elektrischen und mechanischen Verbindung der ersten Schnittstelle (111) mit einem Batteriemodulpol eines ersten Batteriemoduls, und
ein zweites Befestigungselement (160), welches durch das Durchgangsloch (140) der zweiten Schnittstelle (112) geführt ist, zur elektrischen und mechanischen Verbindung der zweiten Schnittstelle (112) mit einem Batteriemodulpol eines zweiten Batteriemoduls, oder
ein zweites Befestigungselement (160), welches durch das Durchgangsloch (140) der zweiten Schnittstelle (112) und die erste Kugelscheibe (131) geführt ist, zur elektrischen und mechanischen Verbindung der zweiten Schnittstelle (112) mit einem Batteriemodulpol eines zweiten Batteriemoduls,
wobei der Durchmesser des Durchgangslochs (140) der ersten Schnittstelle (111) größer ist als der Durchmesser des ersten Befestigungselements (150), oder
wobei der Durchmesser des Durchgangslochs (140) der ersten Schnittstelle (111) größer ist als der Durchmesser des ersten Befestigungselements (150) und der Durchmesser des Durchgangslochs (140) der zweiten Schnittstelle (112) größer ist als der Durchmesser des zweiten Befestigungselements (160).

5. Der Modulverbinder (100) gemäß irgendeinem der Ansprüche 2 und 3,
wobei das Verbindungselement (110) ferner in dem ersten Schnittstellenbereich (110a) und/oder in dem zweiten Schnittstellenbereich (110b) an einer zweiten Außenseite (115) eine weitere Einbuchtung (116) aufweist,
wobei die weitere Einbuchtung (116) eine Kugelpfanne bereitstellt.

6. Der Modulverbinder (100) gemäß Anspruch 5,
wobei die erste Verbindungsvorrichtung (120) und/oder die zweite Verbindungsvorrichtung (130) aufweist:
eine erste Kugelscheibe (121, 131),
wobei die erste Kugelscheibe (121, 131) in der Einbuchtung (114) angeordnet ist, und
eine zweite Kugelscheibe (122, 132),
wobei die zweite Kugelscheibe (122, 132) in der weiteren Einbuchtung (116) angeordnet ist, und
ein erstes Befestigungselement (150), welches durch die zweite Kugelscheibe (122), das Durchgangsloch (140) der ersten Schnittstelle (111) und die erste Kugelscheibe (121) geführt ist, zur elektrischen und mechanischen Verbindung der ersten Schnittstelle (111) mit einem Batteriemodulpol eines ersten Batteriemoduls, und
ein zweites Befestigungselement (160), welches durch das Durchgangsloch (140) der zweiten Schnittstelle (112) geführt ist, zur elektrischen und mechanischen Verbindung der zweiten Schnittstelle (112) mit einem Batteriemodulpol eines zweiten Batteriemoduls, oder
ein zweites Befestigungselement (160), welches durch die zweite Kugelscheibe (132) und das Durchgangsloch (140) der zweiten Schnittstelle (112) geführt ist, zur elektrischen und mechanischen Verbindung der zweiten Schnittstelle (112) mit einem Batteriemodulpol eines zweiten Batteriemoduls, oder
ein zweites Befestigungselement (160), welches durch die zweite Kugelscheibe (132), das Durchgangsloch (140) der zweiten Schnittstelle (112) und die erste Kugelscheibe (131) geführt ist, zur elektrischen und mechanischen Verbindung der zweiten Schnittstelle (112) mit einem Batteriemodulpol des zweiten Batteriemoduls,
wobei der Durchmesser des Durchgangslochs (140) der ersten Schnittstelle (111) größer ist als der Durchmesser des ersten Befestigungselements (150), oder
wobei der Durchmesser des Durchgangslochs (140) der ersten Schnittstelle (111) größer ist als der Durchmesser des ersten Befestigungselements (150) und der Durchmesser des Durchgangslochs (140) der zweiten Schnittstelle (112) größer ist als der Durchmesser des zweiten Befestigungselements (160).

7. Der Modulverbinder (100) gemäß einem der Ansprüche 4 oder 6,
wobei das erste Befestigungselement (150) und/oder das zweite Befestigungselement (160) eine Schraube ist.

8. Der Modulverbinder (100) gemäß irgendeinem der vorherigen Ansprüche, wobei das Verbindungselement (110) aus Kupfer oder Aluminium bereitgestellt ist.

9. Der Modulverbinder (100) gemäß irgendeinem der Ansprüche 4 bis 7, wobei die erste Kugelscheibe (121, 131) aus demselben Material wie das Verbindungselement (110) bereitgestellt ist.

10. Der Modulverbinder (100) gemäß irgendeinem der Ansprüche 6 oder 7, wobei die zweite Kugelscheibe (122, 132) aus Stahl bereitgestellt ist.

11. Eine Batterie (200) aufweisend:
zumindest zwei Batteriemodule (210); und
zumindest ein Modulverbinder (100) gemäß Anspruch 1 bis 10 zum elektrischen und mechanischen Verbinden der zumindest zwei Batteriemodule (210).

12. Ein Fahrzeug (300) aufweisend eine Batterie (200) gemäß Anspruch 11.

13. Verwendung eines Modulverbinders (100) mit zumindest einem Gelenk gemäß einem der Ansprüche 1 bis 10 zum Toleranzausgleich.
